# EUROPEAN PATENT APPLICATION

(11) **EP 2 437 209 A1**
(43) Date of publication of application: **04.04.2012**
(21) Application number: 11183349.7
(22) Date of filing: 29.09.2011
(51) Int. Cl.: G06Q 10/00

(54) **System and method for managing electronic groups**

(30) Priority: 30.09.2010 US 388449 P
(71) Applicant: Research In Motion Limited, Waterloo, ON N2L 3W8 (CA)
(72) Inventor: Vymenets, Leonid, North York, Ontario M2R 3V8 (CA); Taneja, Munish, Toronto, Ontario M6K 3S2 (CA)
(74) Representative: Moore, Barry

(57) **Abstract**

A system and method are provided for operating a computing device, e.g. for instant messaging. In one example, a method comprises providing an option to enable data for an electronic group to be removed when a member leaves the electronic group, and removing the data when the member leaves. In another example, a method comprises determining a capacity indicative of a number of members permitted in an electronic group, and displaying the capacity on the computing device.

## Description

### TECHNICAL FIELD

The following relates to systems and methods for managing electronic groups.

### BACKGROUND

Mobile communication devices are often used to communicate via several different media. For example, a smart phone or personal digital assistant (PDA) having wireless communication capabilities may be used to participate in cellular telephone conversations, to exchange email, to exchange SMS or multimedia messaging service (MMS) messages, to participate in instant messaging (IM) or other conversational type message exchanges, to post or receive social networking updates, etc.

Electronic groups may be formed for participating in group conversations, sharing group data, etc. Members of electronic groups often post or otherwise contribute content to the group. Members may also be added and removed during the lifetime of the group. Electronic groups may include various restrictions, such as how much data can be maintained for a group and how many members may join. The management of group data and group membership may therefore be required.

### SUMMARY

There may be provided a method of operating a computing device, the method comprising: providing an option to enable data for an electronic group to be removed when a member associated with the electronic group leaves the electronic group; and having the data removed from a group database for the electronic group when the member leaves.

There may also be provided a computing device comprising a processor and memory, the memory comprising computer executable instructions that when executed by the processor, operate the computing device by: providing an option to enable data for an electronic group to be removed when a member associated with the electronic group leaves the electronic group; and having the data removed from a group database for the electronic group when the member leaves.

There may also be provided a computer readable medium comprising computer executable instructions for operating a computing device, the computer executable instructions comprising instructions for: providing an option to enable data for an electronic group to be removed when a member associated with the electronic group leaves the electronic group; and having the data removed from a group database for the electronic group when the member leaves.

### BRIEF DESCRIPTION OF THE DRAWINGS

Embodiments will now be described by way of example only with reference to the appended drawings wherein:

FIG. 1 is a block diagram showing an example communications system.

FIG. 2 is a block diagram showing an example configuration for the mobile device of FIG. 1.

FIG. 3 is a system diagram showing one configuration for exchanging IMs on multiple platforms.

FIG. 4 is a block diagram showing an example communication system comprising a plurality of electronic groups.

FIG. 5 is a block diagram showing an example electronic group comprising a server for storing group data.

FIG. 6 is a block diagram showing an example serverless electronic group.

FIG. 7 is a screen shot of an example user interface for selecting group data removal options.

FIG. 8 is a screen shot of an example user interface for prompting a group member about data removal when leaving an electronic group.

FIG. 9 is a screen shot of an example user interface for creating a new group comprising an option to allow members to remove their data when unsubscribing from the group.

FIG. 10 is a flow chart illustrating example computer executable instructions for determining whether to remove personal data when detecting a request to unsubscribe from a group.

FIG. 11 is a screen shot of an example user interface for a group illustrating the initiation of a menu comprising an option to invite a new member.

FIG. 12 is a screen shot of an example user interface for adding a new member comprising a group capacity indicator.

FIG. 13 is a screen shot of an example of an instant messaging (IM) list view user interface (UI).

FIG. 14 is a screen shot of an example of an IM group conversation UI.

FIG. 15 is a screen shot of an example user interface for displaying communication updates.

FIG. 16 is a screen shot of the example user interface of FIG. 13 upon selection of a particular update and comprising a pop-up window with additional information.

FIG. 17 is a screen shot of an example user interface for displaying an IM contact list.

FIG. 18 is a screen shot of an example user interface for displaying IM profile information.

FIG. 19 is a screen shot of an example user interface for changing an IM profile status.

FIG. 20 is a screen shot of the example user interface of FIG. 16 subsequent to a profile change.

FIGS. 21 to 25 are example screen shots illustrating an auto-searching procedure initiated from an IM contact list.

FIG. 26 is a block diagram of an example mobile device.

### DETAILED DESCRIPTION OF THE DRAWINGS

A system and method are provided for operating a computing device, e.g. for instant messaging. In one aspect, a method comprises providing an option to enable data for an electronic group to be removed when a member leaves the electronic group, and removing the data when the member leaves. In another aspect, a method comprises determining a capacity indicative of a number of members permitted in an electronic group, and displaying the capacity on the computing device. In another aspect, a method comprises displaying one or more updates in a user interface, detecting selection of a particular update from the user interface, and displaying additional information for the update in the user interface. In another aspect, a method comprises detecting selection of a portion of a contact list interface, and displaying an option for selecting a status. In another aspect, a method comprises detecting entry of one or more characters in a contact list interface, and displaying a text entry box containing the one or more characters and a filtered list of one or more contacts associated with the one or more characters.

Although the following examples are presented in the context of mobile communication devices, the principles may equally be applied to other devices such as applications running on personal computers and the like.

For clarity in the discussion below, mobile communication devices are commonly referred to as "mobile devices" for brevity. Examples of applicable mobile devices include without limitation, cellular phones, cellular smart-phones, wireless organizers, pagers, personal digital assistants, , handheld wireless communication devices, wirelessly enabled notebook computers, portable gaming devices, tablet computers, or any other portable electronic device with processing and communication capabilities.

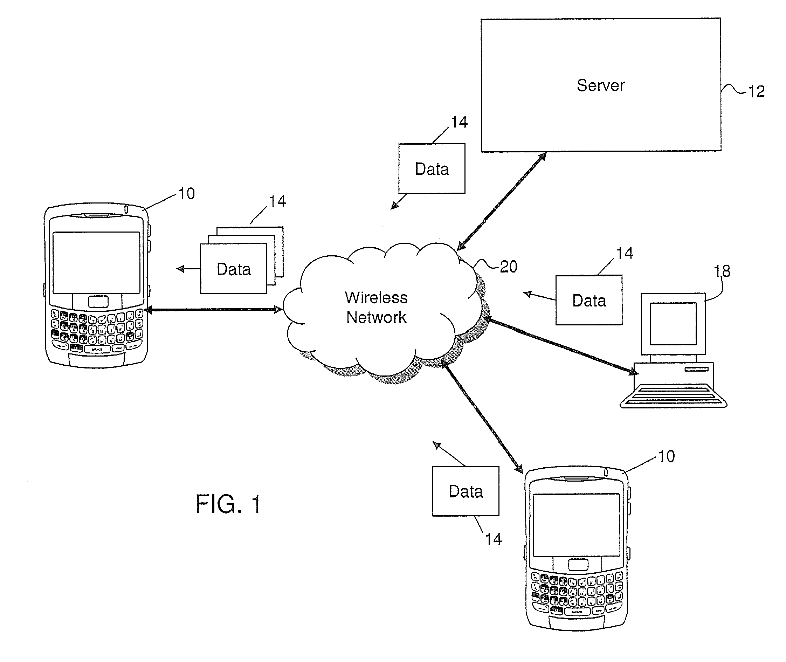

FIG. 1 illustrates an example communications system wherein a first mobile device 10 receives or otherwise obtains various data 14 via a wireless network 20. The data 14 may represent electronic messages (e.g. email, SMS, MMS, IM, etc.), calendar appointments, multimedia, voice communications, etc., to name a few. The data 14 may originate from various types of devices such as a server 12, a personal computer (PC) 18, and other mobile devices 10 as shown by way of example only in FIG. 1.

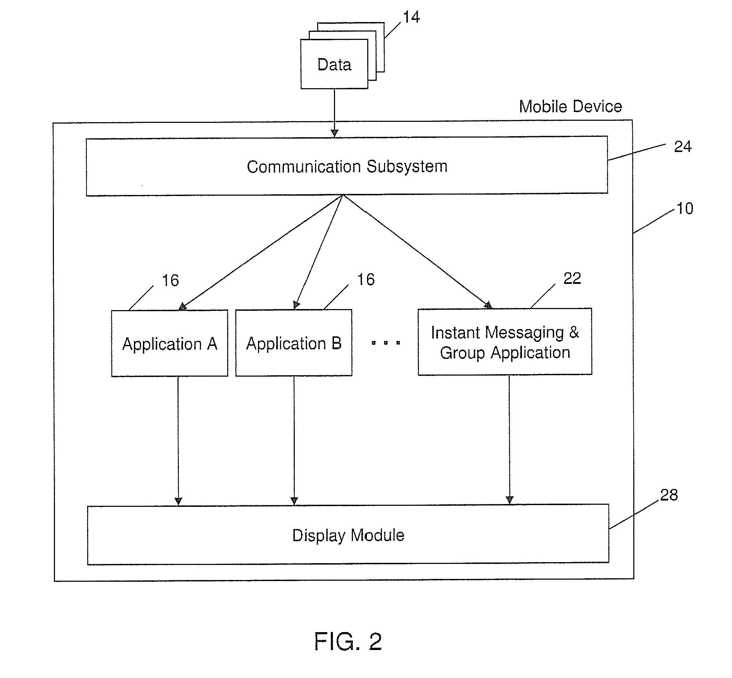

Turning now to FIG. 2, an example of a configuration for a mobile device 10 receiving data 14 is shown. It will be appreciated that the mobile device 10 may be configured in a different way and may comprise additional components to those shown in FIG. 2 while enabling the principles discussed herein to be implemented. In this example, a communication subsystem 24 is provided which enables the mobile device 10 to communicate via the wireless network 20, including for obtaining or receiving data 14. The data 14, as discussed earlier, may correspond to various different communications media and thus such data 14 is typically received and handled by a corresponding application 16. Of the applications 16 illustrated in FIG. 2, an instant messaging and group application 22 is shown which may hereinafter be referred to as "the IM application 22" for brevity. The applications 16, 22 typically utilize the data 14 in providing a graphical user interface (GUI) displayed on a display screen 38 using a display module 28, however, it can be appreciated that the data 14 may be used for other purposes unrelated to the display of information.

Further detail of the way in which the IM application 22 can be used for conducting instant messaging will now be described by way of example only.

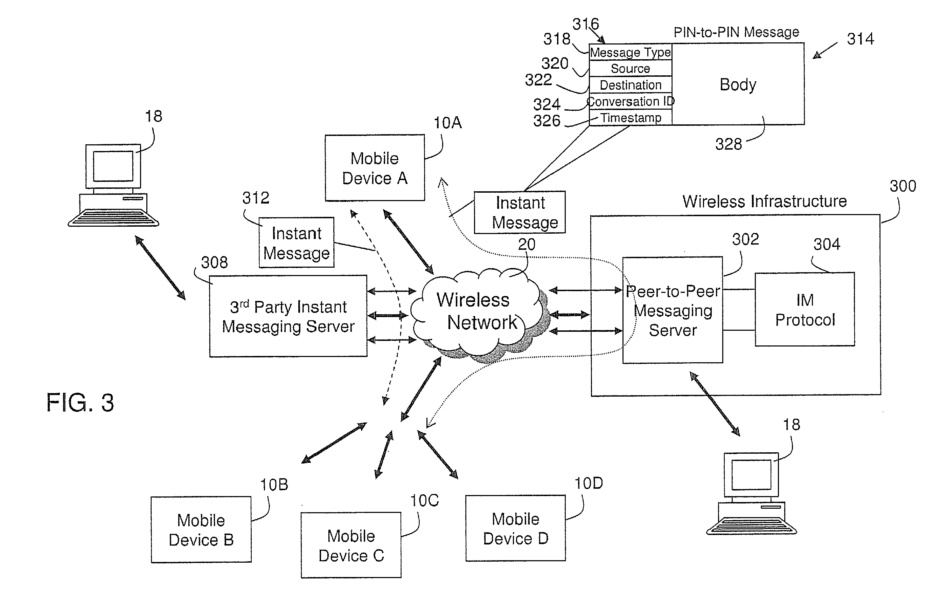

Turning now to FIG. 3, a configuration suitable for a user of mobile device A, hereafter referred to as mobile device 10A, to conduct instant messaging with buddies included in their IM contact list is shown. It can be seen in FIG. 3 that two examples of instant messaging systems are shown. A first system incorporated into the wireless infrastructure 300 of a wireless network 20 is shown, which in this example is a peer-to-peer based system, e.g. a personal identification number (PIN)-based messaging system, that utilizes a device such as a server or router provided by the wireless infrastructure 300. A 3^{rd} party instant messaging service is also shown that utilizes a 3^{rd} party instant messaging server 308 accessed by mobile device 10A through the wireless network 20. As can be seen, the 3^{rd} party instant messaging server 308 may also communicate with desktop computers 18 thus facilitating instant messaging between desktop computers 18 and between a mobile device 10 and a desktop application on a desktop computer 18. Similarly, the peer-to-peer based messaging system may also facilitate communications with desktop computers 18.

In the example illustrated in FIG. 3, a PIN-based messaging system is implemented using a server-based communication infrastructure, such as one that provides email, SMS, voice, Internet and other communications. Particularly suitable for hosting a peer-to-peer messaging server 302, is a wireless router or server used in systems such as those that provide push-based communication services. In FIG. 3, the wireless infrastructure 300 facilitates communications such as instant messaging between mobile device 10A and mobile devices for User B, User C and User D, denoted by 10B, 10C and 10D respectively using a peer-to-peer messaging server 302. It will be appreciated that the number of users participating in the example shown in FIG. 3 is for illustrative purposes only. Instant messaging is provided by an instant messaging program or application stored on each mobile device 10A - 10D which can be initiated, for example, by highlighting and selecting an instant messaging icon from a display as is well known in the art. The peer-to-peer messaging server 302 routes messages between the mobile devices 10A-10D according to an IM protocol 304.

An instant message is generally denoted by numeral 314 in FIG. 3, and has a format that is particularly suitable for a PIN-to-PIN based system. In a typical IM protocol 304, each message 314 has associated therewith a source corresponding to the mobile device 10 which has sent the message 314 and includes a destination identifying the intended recipient. Further detail of an example structure for the messages 314 is also shown in FIG. 3. Each message 314 generally comprises a body 328, which contains the content for the message 314 (e.g. text), and a header 316, which contains various fields used for transmitting and processing each message 314. In this example, the header 316 includes a message type field 318 to specify the type of transmission (e.g. PIN, SMS etc.), a source field 320 to specify the device address for the sender, a destination field 322 to specify the device address for the intended recipient, a conversation ID field 324 to identify which conversation thread the message 314 corresponds to (e.g. such that each message 314 is identified by the conversation in which it was sent), and a timestamp field 326 to indicate the time (and if desired, the date) at which the message 314 was sent by the designated sender.

It will be appreciated that other information or attributes may be included in the message 314, such as a subject field (not shown) to enable a subject for part or all of the conversation to be transported with the message 314 (e.g. to create new subjects, modify subjects, notify others of subjects, etc.). Although not shown in FIG. 3, one or more tags can also be used to indicate to the instant messaging application 22, upon receipt of a message 314, that the message 314 has certain attributes such as a subject that is to be displayed, whether additional information is being transported (i.e. data or information in addition to the message content), or whether the message 314 is being used for some other purpose such as provisioning, synchronization, etc.

In general, in an IM protocol 304, the sender of the message 314 knows the source address of the intended recipient, e.g. a PIN. This may be established when the two devices request to add each other to their respective contact or buddy lists. At the time of requesting new contacts, in traditional IM protocols 304, the two respective PIN numbers may be exchanged via request e-mails which are configured to be intercepted by the respective instant messaging applications 22 so as to not appear in the message list or "inbox" of the user. In other examples, to avoid the exchange of email messages to add a buddy to the IM contact list, a global address list (GAL) application (at the host system - not shown) may instead be accessed in order to obtain the source address for the intended recipient directly. Alternatively, the user may simply ask for the source address from another user and enter it manually.

It can be seen in the example shown in FIG. 3 that mobile device 10A can communicate directly with any of the mobile devices 10B-10D through the peer-to-peer messaging server 302 as indicated by the short-dashed line. Instant messaging can also be accomplished through the 3^{rd} party IM server 308 by sending 3^{rd} party based instant messages 312 over the wireless network 20 as indicated by the long-dashed line.

When conducting an instant messaging session according to the example shown in FIG. 3, the mobile devices 10A-10D can communicate directly with the wireless infrastructure 300 in a client based exchange where, similar to other peer-to-peer programs, an intermediate server is not required. A message 314 sent by one mobile device 10 is received by the wireless infrastructure 300, which obtains the source address for the intended recipient from information associated with the message 314 (e.g. a data log) or from the message 314 itself. Upon obtaining the recipient's address according to the IM protocol 304, the wireless infrastructure 300 then routes the message 314 to the recipient associated with the mobile device 10 having such address. The wireless infrastructure 300 typically also provides a delivery confirmation to the original sender, which may or may not be displayed to the user. The destination device can also provide such delivery information. The wireless infrastructure 300 should be capable of routing messages 314 reliably and hold onto the messages 314 until they are successfully delivered. Alternatively, if delivery cannot be made after a certain timeout period, the wireless infrastructure 300 may provide a response indicating a failed delivery. The wireless infrastructure 300 may choose to expire a message 314 if a certain waiting period lapses.

It will also be appreciated that, as noted above, instant messaging can be implemented using any other suitable protocol such as SMS (not shown). In an SMS system, a message is transmitted to an SMS center (SMSC) within a carrier's infrastructure, and then delivered to the mobile phone number of the destination device (mobile devices 10A, 10B, 10C, or 10D in this example). The SMSC would also be configured to hold onto messages by storing them in a message storage memory and deliver then once the destination device is within coverage of the wireless network 20.

Turning back to FIG. 3, when conducting an instant messaging session using a 3^{rd} party IM application, access to the 3^{rd} party IM server 308 is first established and instant messages 312 are exchanged over the wireless network 20 according to the appropriate protocol used by the 3^{rd} party. It will be appreciated that the principles discussed below are equally applicable to both peer-to-peer (e.g. PIN-to-PIN) messaging and other Internet service-based instant messaging systems hosted by such 3^{rd} parties.

It will be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 10, wireless infrastructure 300, peer-to-peer messaging server 302, 3^{rd} Party IM server 308, desktop computer 18, server 12, etc., or accessible or connectable thereto. Any application or module herein described may be implemented using computer readable/executable instructions that may be stored or otherwise held by such computer readable media.

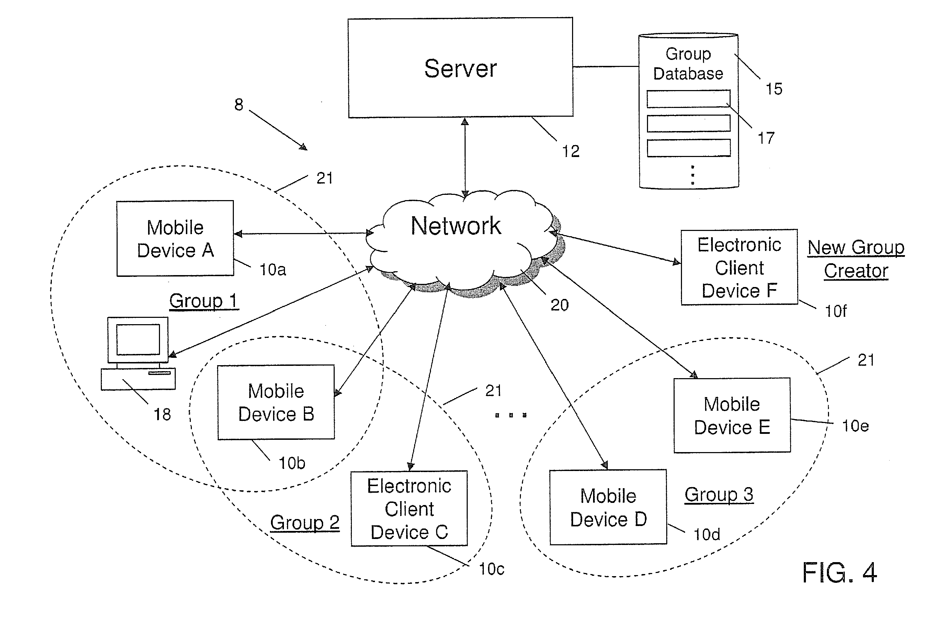

FIG. 4 illustrates another example of an electronic communications system 8, which also comprises a number of mobile communication devices 10 (mobile device 10 hereinafter) that may communicate with each other and a server 12 via the network 20. Also shown in FIG. 4 is a PC 18 to illustrate that other computing devices with communication capabilities may also communicate with other devices and the server 12 via the network 20. The network 20 can be an internal network such as a LAN or a global system of interconnected networks such as the Internet. The network 20 may comprise wired communication capabilities, wireless communication capabilities or both. It can be appreciated that the network 20 shown in FIG. 4 is for illustrative purposes and for ease of explanation only. The server 12 in this example comprises a group database 15 which as will be explained in greater detail below stores a set of group data 17 for each of a corresponding number of groups 21. It may be noted that the term "group" used herein can also refer to electronic communication groups and is used only for brevity.

Three example groups are shown in FIG. 4, and are delineated by the dashed lines. It can be appreciated that any number of group members may form a single group 21 and any combination of device types can be permitted. Also, the same device can belong to more than one group as illustrated by the inclusion of Mobile Device B in both Group 1 and Group 2. Also shown in FIG. 4 is another electronic client device 10f also identified as Electronic Client Device F, which in this example is a new group creator, that being, electronic client device 10f creates a new group 21, which then establishes a new set of group data 17 in the group database 15. The devices 10, 18, hereinafter also commonly referred to as "electronic client devices" may locally store all or a portion of the group data 17, and may also store group-related data (not shown) that is in addition to what is stored in the group database 15.

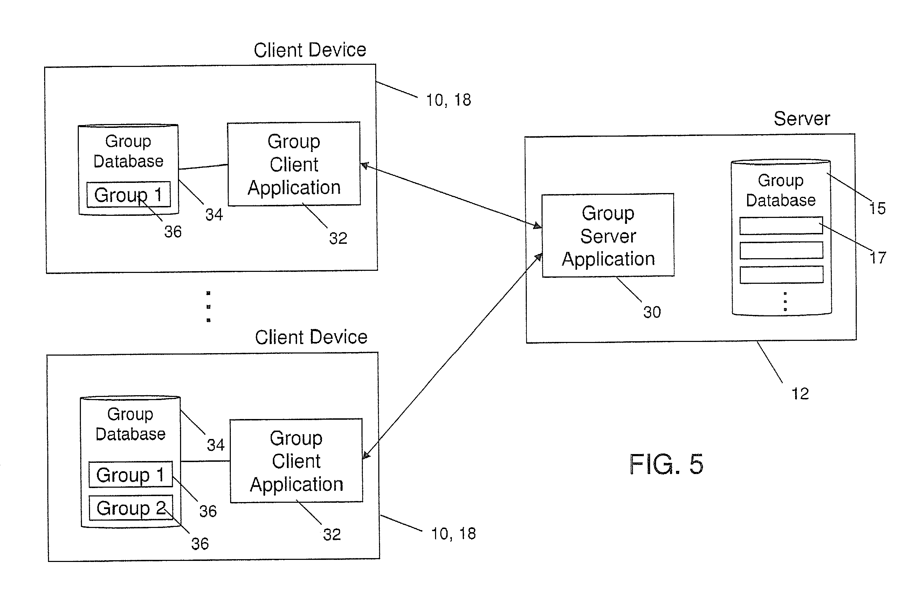

FIG. 5 illustrates an example of a configuration for two example client devices 10, 18 and the server 12. The server 12 comprises a group server application 30 which provides an interface for enabling client devices 10, 18 to participate in group activities via the server 12. As can be appreciated from FIG. 5, the group database 15 may be internal to the server 12 or external as illustrated in FIG. 4. Each client device 10, 18 comprises a group client application 32, which is used by the client device 10, 18 to participate in group activities and enables the client device 10, 18 to interface with the server 12 and, in some examples, directly with other client devices 10, 18. The client device 10, 18 also comprises a local group database 34 used to locally store group data 36. As can be appreciated from FIG. 5, the client device 10, 18 stores a set of local group data 36 for each group of which it is a member while the server 12 stores a set of global group data 17 for all groups 21 which it hosts.

The group client application 32 in this example is used for enabling the client devices 10, 18 to communicate using a group-based medium, such as social networking, instant messaging, etc. The corresponding group server application 30 can be configured to enable a client device 10, 18 to post data for the group 21 on the server 12 or to communicate with another client device 10, 18 via the server 12 as is well known in the art.

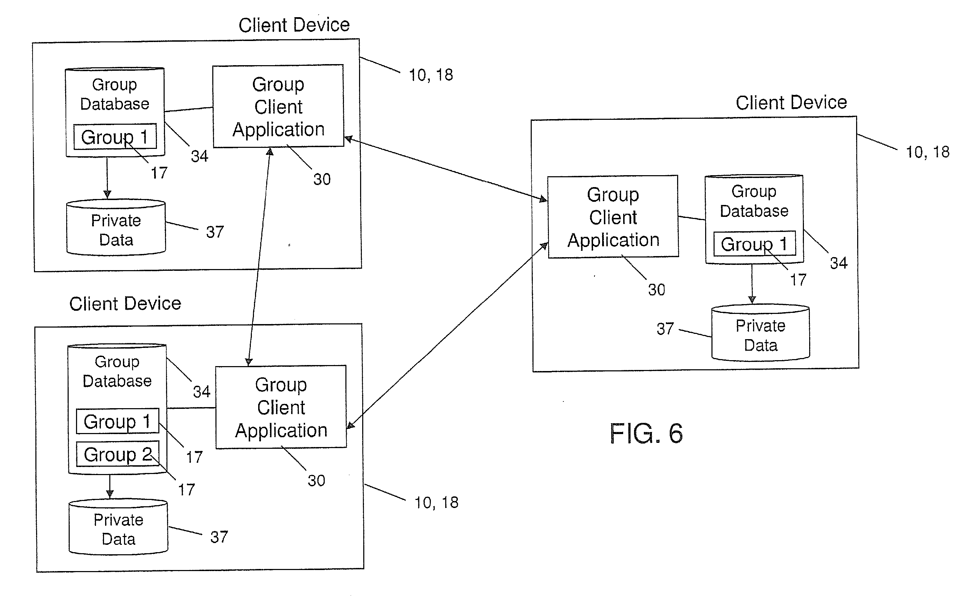

Although the above principles have been discussed with respect to groups in a server-based environment, such principles equally apply to serverless environments, e.g. wherein each group member stores and updates its own copy of the group data 17 as shown in FIG. 6. In FIG. 6, it can be seen that in such a configuration, each client device 10, 18 includes a copy of the group data 17 for each group 21 of which the client device 10, 18 is a member, and which would have been stored by the server 12. As shown in FIG. 6, each client device 10, 18 may have different sets of group data 17 and in the example shown, the group of client devices 10, 18 commonly stores group data 17 for Group 1 and thus the group 21 shown represents the members of Group 1. The group data 17 is then updated by having the client devices 10, 18 distribute updated group data 17 amongst themselves rather than accessing a central server to maintain an up-to-date copy. Also shown in FIG. 6 is private data 37 that the client device 10, 18 may store that is related to a group 21 but not shared amongst all (or any) of the other members. When configured as shown in FIG. 6, the principles described herein still apply, however, additions, modifications, and deletions associated with group membership or group data would be reflected on each device 10, 18.

When communicating in an electronic group 21, as shown by way of example in FIGS. 4 to 6, at various times new members may be added and/or existing members may be removed or remove themselves, e.g. by "unsubscribing" from the group 21. While being a member of the group 21, a user or associated client device 10, 18 may contribute content, e.g. by uploading pictures or videos, participating in chats, adding or marking up lists, etc. When the member is to be removed from the group 21, some or all of the content that has been contributed may be personal and thus in some circumstances the member may desire to remove such content from the group data 17 once they have left the group 21. This may be particularly desirable when the group 21 continues to exist for some time after a particular member leaves or unsubscribes from the group.

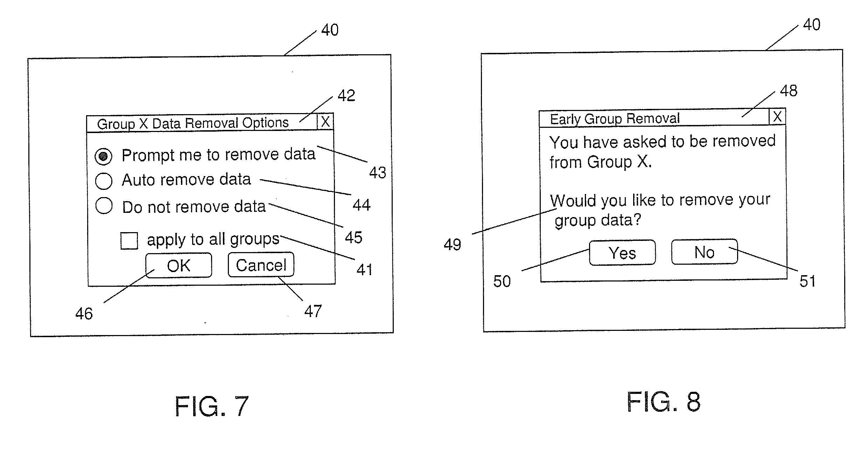

Turning now to FIG. 7, an example of a screen shot of a display screen 40 displaying a group data removal options interface 42 is shown. In this example, the options interface 42 comprises three alternative options for implementing the removal of that member's data (if any) when they leave a group 21. The options interface 42 in this example may be initiated from, for example, within the IM application 22. A prompt option 43 is provided which, when selected, initiates a prompt 48 to be displayed as shown in FIG. 8. The prompt 48 in this example is displayed after detecting that the member has requested to be removed from Group X, and includes a message 49 requesting the user to select whether or not to have their portion of the group data 17 removed from the group 21. A Yes button 50 and a No button 51 are provided to enable the user to make a selection. Turning back to FIG. 7, an auto remove data option 44 is also provided. The auto remove option 44, when selected, automatically removes that member's data from the particular group 21 when they leave that group 21. A do not remove data option 45 may also be provided to enable the member to indicate that they do not wish to remove data when they leave the group 21.

The ability to define what happens to the member's data when they leave a group 21 can be group-specific or can be applied to all groups on a user-by-user basis. For example, as shown in FIG. 7, although the options are being defined for Group X, an apply to all groups check box 41 can also be included to allow such options to be propagated to other groups 21 of which that client device 10, 18 is a member. It can be appreciated that the options shown in the user interface 42 in FIG. 7 could instead or also be provided in a general options interface (not shown) that applies options or preferences for all groups 21, rather than or in addition to including the apply to all groups check box 41 for individual group options.

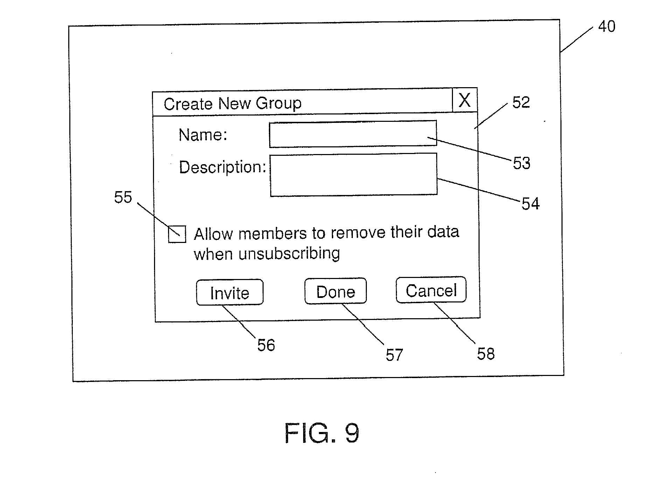

An option to enable members to remove their data from a group 21 when the members unsubscribe can also be provided to, for example, the group creator as shown in FIG. 9. FIG. 9 illustrates a create new group interface 52, which includes a name entry box 53 and a description box 54 for identifying the new group 21; an invite option 56 to enable the group creator to invite group members; a done button 57 to complete the group creation process; and a cancel button 58, to enable the group creation process to be aborted or cancelled. Also shown in FIG. 9 is a checkbox 55 that, when selected, allows individual group members to remove their data when unsubscribing from the new group 21.

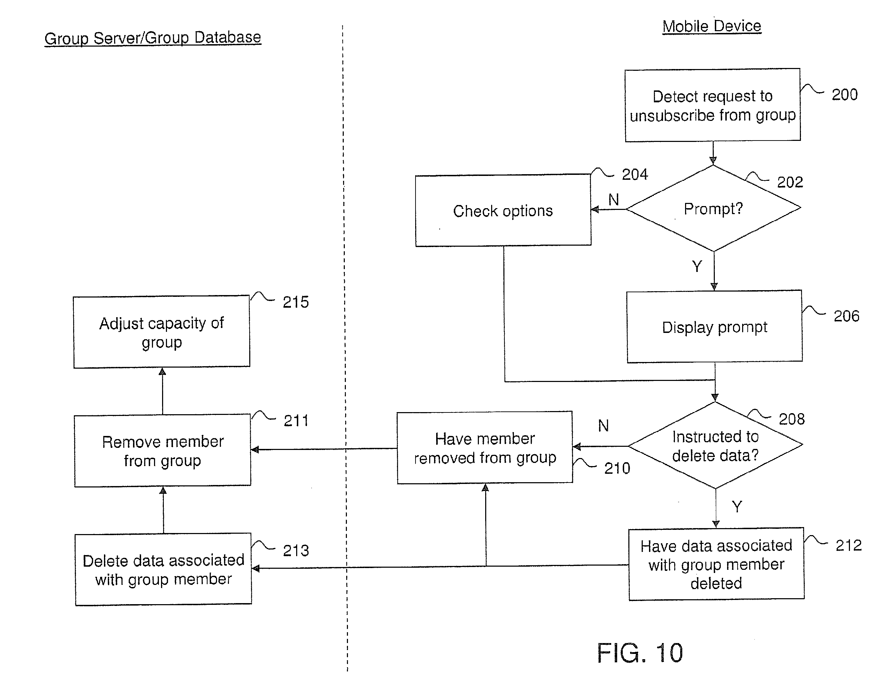

FIG. 10 illustrates an example of a set of computer executable instructions that may be executed by, for example, the IM application 22, on the mobile device 10 and the group server application 30 on the server 12, for handling group data removal. At 200, a request to unsubscribe from a group 21 is detected by the IM application 22. The IM application 22 determines, at 202, if a prompt 48 is to be provided. For example, the IM application 22 may reference options or preferences for itself or defined for that particular group. If a prompt is not required, the IM application 22 checks the options, at 204, to determine whether or not the member's data contributed to the group data 17 for that group 21 should be removed. If a prompt is required, the IM application 22 displays the prompt 48 in this example at 206. Whether or not to delete the member's data is then determined, at 208, either from detecting a selection from the prompt 48 or from the options checked at 204. If the data is to be deleted, the IM application 22 has the data associated with the group member removed, at 212, e.g., by communicating with the group server application 30 and having the group server application 30 delete the data associated with that group member, at 213. The member is then removed from the group 21 by the group server application 30, at 211. The member is also removed from the group 21, e.g., by removing a group contact list entry or other designation on the mobile device, at 210.

If the data associated with the group member is not to be deleted, the member may still be removed from the group 21, e.g., by removing a group contact list entry or other designation on the mobile device at 210, and having the group server application 30 remove the member from the group 21 at 211. As also shown in FIG. 10, if the group 21 has associated therewith a capacity (i.e., a maximum number of members), after removing the member from the group, the group server application 30 can adjust the capacity of the group at 215, i.e., by reducing the number of members and providing this information to the mobile devices 10 to enable the respective IM applications 22 to indicate a new group capacity, further details of which are described below.

It can be appreciated that the determination of what data should be removed can be performed in various ways. For example, the group creator or other administrator can impose controls on what types of data can be removed. Also, group options and preferences can be provided (not shown) that enable the user to select what they wish to completely dedicate to the group 21 and what they wish to delete if they leave the group 21. For example, a member may wish to leave comments, chats, and other context-specific data but remove pictures, video, and other "personal" data when they unsubscribe or leave the group 21. By enabling group members to control what data is removed when that member leaves the group and what data is "left behind", a balance can be achieved between minimizing the amount of data stored by, for example, the server 12, and avoiding the removal of data to the detriment of the remaining members. For example, comments or chats contributed by the former member may still be useful to the remaining members whereas personal data such as pictures may not.

An electronic group 21, such as that shown in FIGS. 4 to 6 may have an upper limit on the number of members that may be permitted. The upper limit may be dictated by storage or bandwidth constraints or other administrative considerations or constraints associated with the group. In such cases, providing both the group capacity and the current membership enables group membership to be better managed. For example, by knowing that a group capacity has been reached, invitations to prospective members that would be blocked from joining due to a lack of space in the group can be avoided. Moreover, by recognizing that the group capacity is nearing, group creators and/or organizers can initiate attempts to have inactive members removed to allow for new members to join.

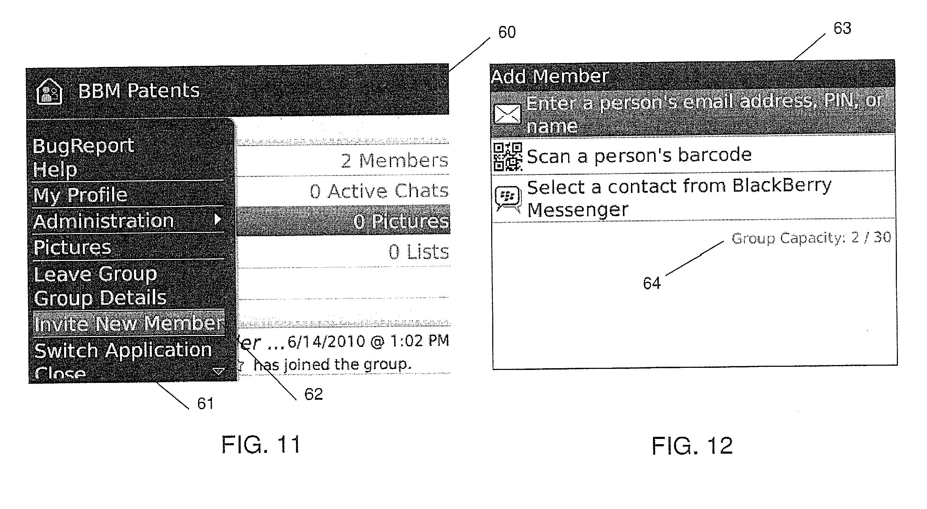

FIG. 11 illustrates an example group interface 60, wherein upon initiating a menu 61, an Invite New Member option 62 can be selected. Upon selecting the Invite New Member option 62, an Add Member interface 63 is displayed as shown in FIG. 12. A group capacity indicator 64 is displayed in the Add Member interface 63 to provide both the current number of members and the group capacity. In this way, before a new member is added, the inviter can determine what effect a new member would have, e.g. reaching the group capacity upper limit, or if that member can even join, e.g. if the group capacity upper limit has already been reached.

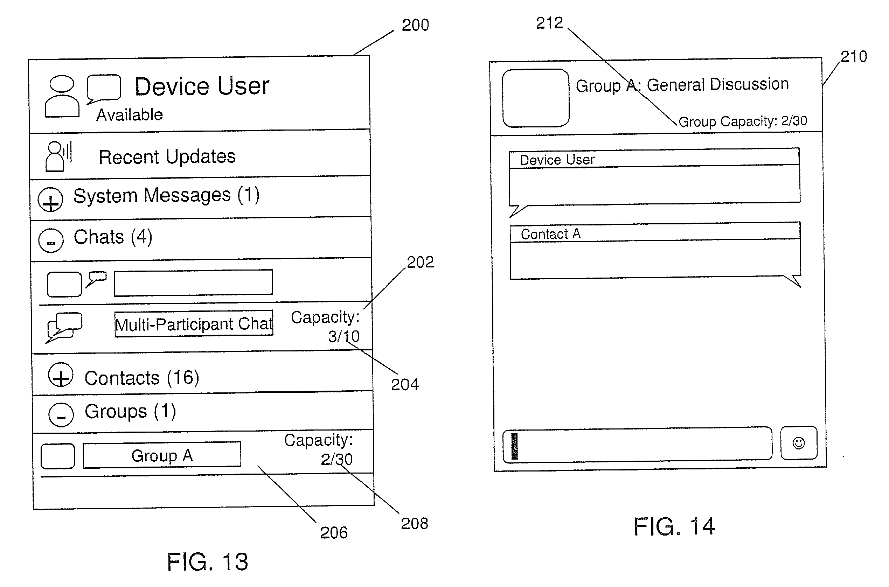

An indication of the capacity of a group can be displayed using an indicator associated with the capacity in various other Uls. For example, as shown in FIG. 13, a first group capacity indicator 204 can be displayed in association with a multi-participant chat list entry 202. Similarly, a second group capacity indicator 208 may be displayed in association with a group list entry 206. It can be appreciated that in this example, both multi-participant chats which are not necessarily associated with an ongoing group 21 (i.e., the list entry 202) and formally created groups 21 (i.e., the list entry 206) can have capacities that are indicated using the first and second group capacity indicators 204, 208. In either case, the group capacity indicator 204, 208 allows the user to determine at a glance whether or not additional group members or conversation participants can be added and how many are currently active in the group 21 or multi-participant conversation.

FIG. 14 illustrates another group capacity indicator 212, which is displayed in a group chat Ul 210. It can be appreciated that a similar indicator can be displayed in a multiple-participant conversation. By displaying such an indicator 212, the user can determine during an ongoing chat whether or not additional group members or conversation participants can be added.

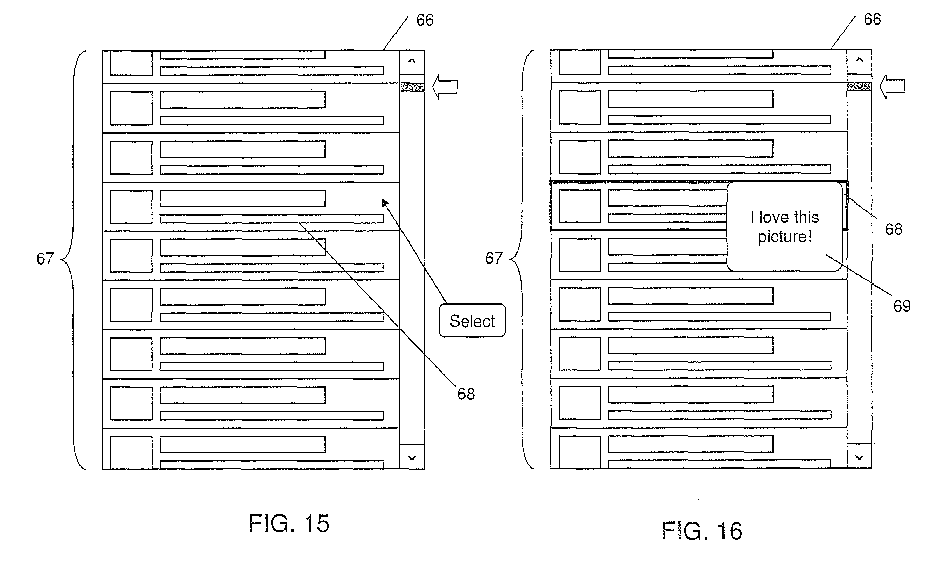

As data such as pictures, chats, lists, videos, etc. are added to the group data 17, and such data is used, commented on, or otherwise interacted with by group members, updates may be generated that notify group members of events. For example, a picture that is uploaded for the group 21 and stored in the group data 17, may be commented on by another member. FIG. 15 illustrates an example updates user interface 66 comprising a list 67 of various updates 68. The updates 68 may be organized according to the corresponding member or based on update type - e.g. updates related to a list can be grouped separately from updates associated with pictures. In this example, the updates 68 in the list 67 comprise information identifying the updater, such as an avatar, name, and a preview associated with the update. By selecting a particular update as shown in FIG. 15, further information regarding the update can be shown in a pop-up window 69 or similar tool tip or other display element as shown in FIG. 16. In this way, the updates 68 in the list 67 provide information about the update 68 without overwhelming the display thus allowing more updates to be seen in a single screen. The pop-up 69 enables, for example, a more complete description of the update 68 to be provided thus providing more context to the user for determining whether or not to open the update. This pop-up 69 allows the user to "preview" an update conveniently from the updates list 67 before committing to opening the entire update. It can be appreciated that the pop-up 69 can be used in other update-related user interfaces, e.g. those related to social networking or other communications media.

Members of groups and participants in IM typically have associated therewith a profile which may include, among other things, a status. The status may indicate to other members or participants, whether or not the user is available, offline, busy, on the phone, etc. When navigating into and out of an application such as the IM and group application 22, the user may wish to change their status to indicate to other users that, for example, they are now available, or will be busy.

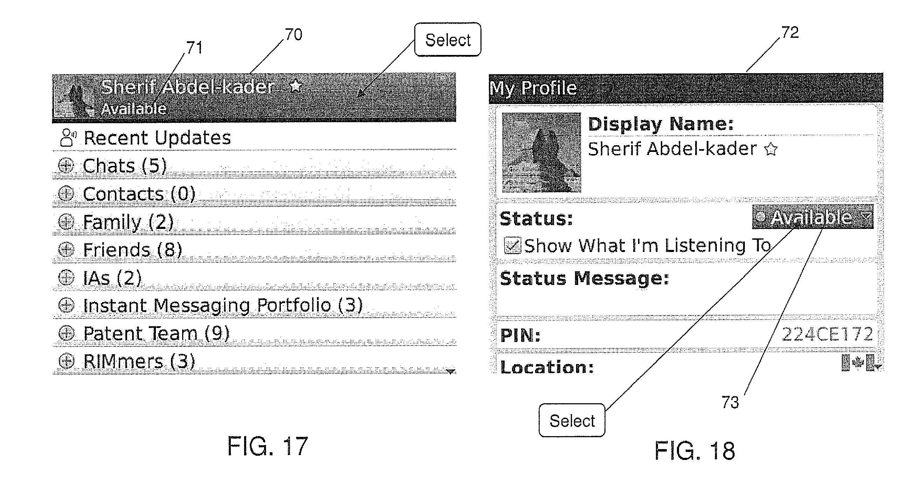

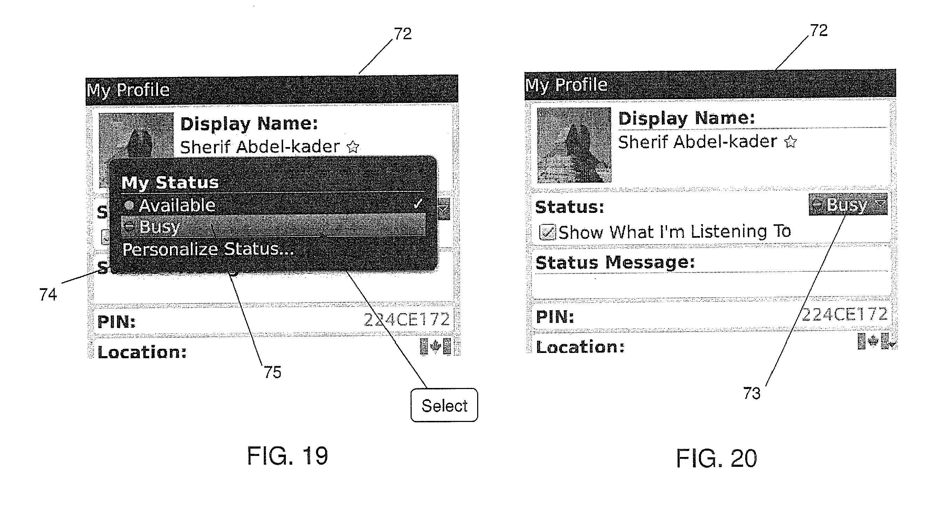

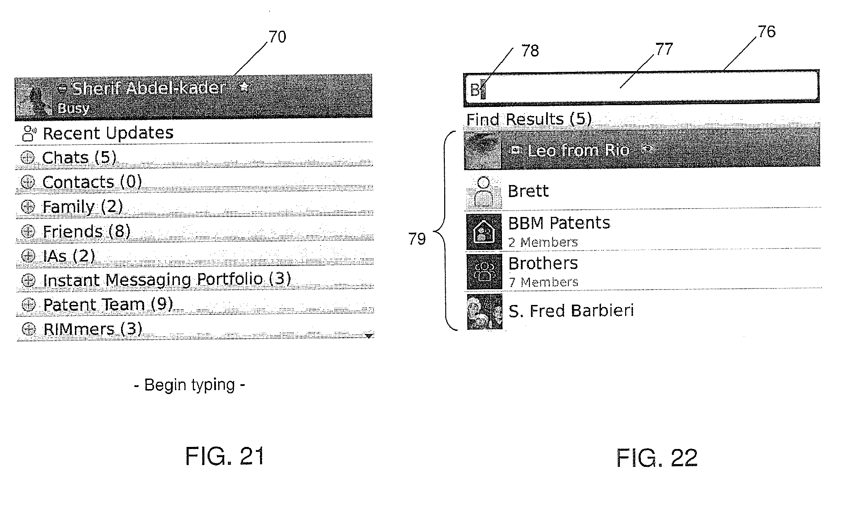

FIG. 17 illustrates an example contact list interface 70 that comprises, in its uppermost portion (often referred to as a "banner"), a status indicator 71. Since the user may change their status often, and navigating into and out of the IM and group application 22 typically passes through such a contact list interface 70, it has been found that the ability to conveniently update a user's status at this point is particularly advantageous. By highlighting and selecting the banner portion, as shown in FIG. 17 (e.g. using a pointing device, scrolling device, touch input, etc.), a profile interface 72 is immediately displayed, as shown in FIG. 18. The user may then quickly and conveniently access a status selector mechanism 73 to change their status. By selecting the status selector mechanism, as shown in FIG. 18, a selection window is displayed, as shown in FIG. 19, and the user may make their desired status change, for example to "Busy". The change is reflected in an update to the status selector mechanism 73, as shown in FIG. 20, and the change is in turn reflected in the banner, as shown in FIG. 21.

Accordingly, by enabling the profile interface 72 to be accessed directly from the contact list interface 70, the user is not required to initiate a menu, find the option, and then select the option thus reducing the number of operations required to access a commonly used feature.

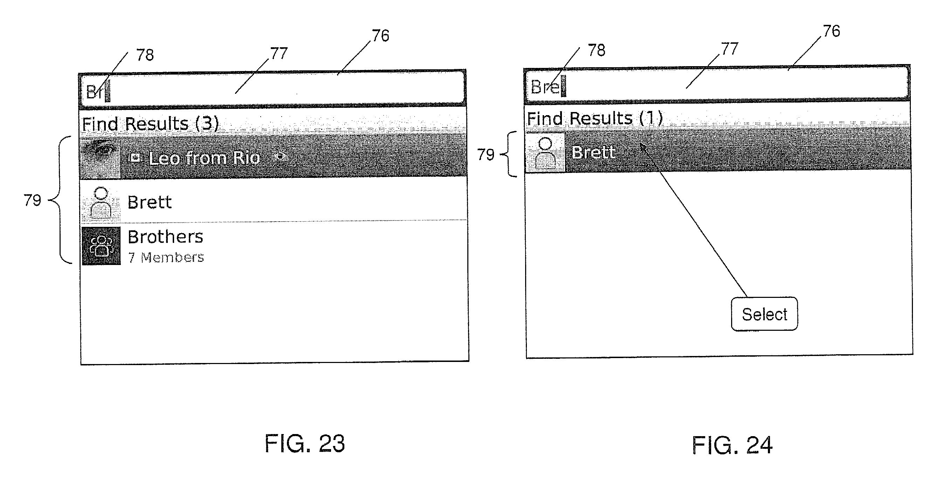

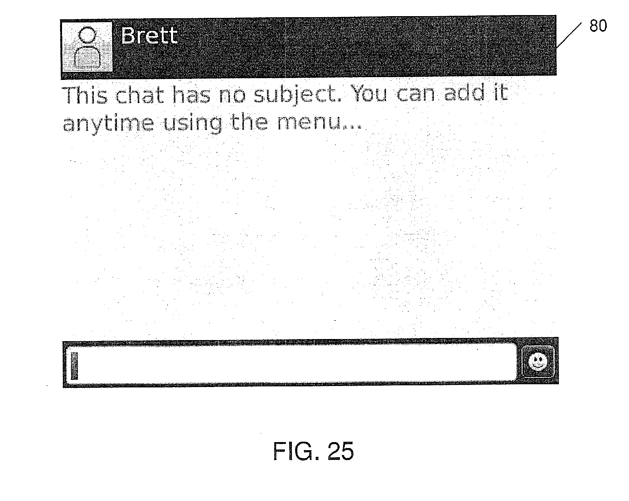

Turning to FIG. 21, by beginning to type from the contact list interface 70, an automatic searching of contacts is performed, as shown in FIG. 22. By having typing or another action initiate the search, the contact list interface 70 is not required to dedicate a portion thereof to providing a search input box. As shown in FIG. 22, a search interface 76 is displayed once the search is initiated (by typing directly in the contact list interface 70), which provides a text entry box 77. As characters 78 are entered in the entry box 77, a filtered list 79 of contacts is displayed. FIGS. 23 and 24 illustrate that as additional characters 78 are entered, the list 79 is further filtered. In this example, the contact "Brett" is found and by selecting this contact from the search interface 76, a new or existing chat 80 is initiated, as shown in FIG. 25. As such, it can be appreciated that the search interface 76 can be concealed until it is desired, which frees up additional space in the contact list interface 70 for listing the contacts. By utilizing the detection of new characters being typed to initiate the search interface 76, the user both initiates the contact list filtering while contributing the characters that are used for the filtering, thus requiring fewer operations than the use of a menu or additional input.

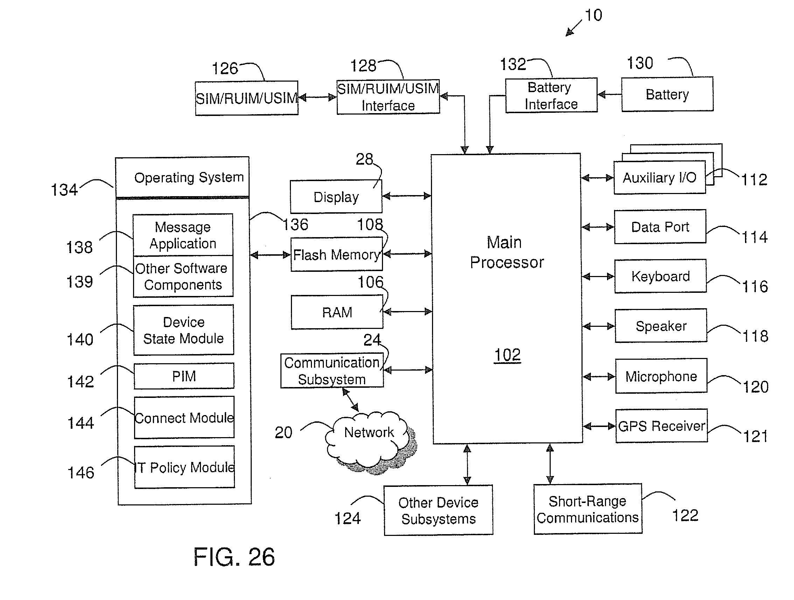

Referring now to FIG 26, shown therein is a block diagram of an example mobile device 10. The mobile device 10 comprises a number of components such as a main processor 102 that controls the overall operation of the mobile device 10. Communication functions, including data and voice communications, are performed through a communication subsystem 24. The communication subsystem 24 receives messages from and sends messages to a wireless network 20. In this example mobile device 10, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by 3G and 4G networks such as Enhanced Data-rates for Global Evolution (EDGE), Universal Mobile Telecommunications System (UMTS) and High-Speed Downlink Packet Access (HSDPA), Long Term Evolution (LTE), Worldwide Interoperability for Microwave Access (Wi-Max), etc. New standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 24 with the wireless network 20 represents one or more different Radio Frequency (RF) channels, operating according to defined protocols specified for GSM/GPRS communications. With newer network protocols, these channels are capable of supporting both circuit switched voice communications and packet switched data communications.

The main processor 102 also interacts with additional subsystems such as a Random Access Memory (RAM) 106, a flash memory 108, a display 28, an auxiliary input/output (I/O) subsystem 112, a data port 114, a keyboard 116, a speaker 118, a microphone 120, GPS receiver 121, short-range communications 122 and other device subsystems 124.

Some of the subsystems of the mobile device 10 perform communication-related functions, whereas other subsystems may provide "resident" or on-device functions. By way of example, the display 28 and the keyboard 116 may be used for both communication-related functions, such as entering a text message for transmission over the network 20, and device-resident functions such as a calculator or task list.

The mobile device 10 can send and receive communication signals over the wireless network 20 after required network registration or activation procedures have been completed. Network access is associated with a subscriber or user of the mobile device 10. To identify a subscriber, the mobile device 10 may use a subscriber module. Examples of such subscriber modules include a Subscriber Identity Module (SIM) developed for GSM networks, a Removable User Identity Module (RUIM) developed for CDMA networks and a Universal Subscriber Identity Module (USIM) developed for 3G networks such as UMTS. In the example shown, a SIM/RUIM/USIM 126 is to be inserted into a SIM/RUIM/USIM interface 128 in order to communicate with a network. The SIM/RUIM/USIM component 126 is one type of a conventional "smart card" that can be used to identify a subscriber of the mobile device 10 and to personalize the mobile device 10, among other things. Without the component 126, the mobile device 10 may not be fully operational for communication with the wireless network 20. By inserting the SIM/RUIM/USIM 126 into the SIM/RUIM/USIM interface 128, a subscriber can access all subscribed services. Services may include: web browsing and messaging such as e-mail, voice mail, SMS, and MMS. More advanced services may include: point of sale, field service and sales force automation. The SIM/RUIM/USIM 126 includes a processor and memory for storing information. Once the SIM/RUIM/USIM 126 is inserted into the SIM/RUIM/USIM interface 128, it is coupled to the main processor 102. In order to identify the subscriber, the SIM/RUIM/USIM 126 can include some user parameters such as an International Mobile Subscriber Identity (IMSI). An advantage of using the SIM/RUIM/USIM 126 is that a subscriber is not necessarily bound by any single physical mobile device. The SIM/RUIM/USIM 126 may store additional subscriber information for a mobile device as well, including datebook (or calendar) information and recent call information. Alternatively, user identification information can also be programmed into the flash memory 108.

The mobile device 10 is typically a battery-powered device and includes a battery interface 132 for receiving one or more batteries 130 (typically rechargeable). In at least some embodiments, the battery 130 can be a smart battery with an embedded microprocessor. The battery interface 132 is coupled to a regulator (not shown), which assists the battery 130 in providing power V+ to the mobile device 10. Although current technology makes use of a battery, future technologies such as micro fuel cells may provide the power to the mobile device 10.

The mobile device 10 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, may be installed on the mobile device 10 during its manufacture. Other software applications include a message application 138 that can be any suitable software program that allows a user of the mobile device 10 to send and receive electronic messages. Various alternatives exist for the message application 138 as is well known to those skilled in the art. Messages that have been sent or received by the user are typically stored in the flash memory 108 of the mobile device 10 or some other suitable storage element in the mobile device 10. In at least some embodiments, some of the sent and received messages may be stored remotely from the mobile device 10 such as in a data store of an associated host system that the mobile device 10 communicates with.

The software applications can further comprise a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 10 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 20. PIM data items may be seamlessly integrated, synchronized, and updated via the wireless network 20 with the mobile device subscriber's corresponding data items stored and/or associated with a host computer system. This functionality creates a mirrored host computer on the mobile device 10 with respect to such items. This can be particularly advantageous when the host computer system is the mobile device subscriber's office computer system.

The mobile device 10 may also comprise a connect module 144, and an IT policy module 146. The connect module 144 implements the communication protocols that are required for the mobile device 10 to communicate with the wireless infrastructure and any host system, such as an enterprise system, that the mobile device 10 is authorized to interface with.

The connect module 144 includes a set of APls that can be integrated with the mobile device 10 to allow the mobile device 10 to use any number of services associated with the enterprise system. The connect module 144 allows the mobile device 10 to establish an end-to-end secure, authenticated communication pipe with a host system (not shown). A subset of applications for which access is provided by the connect module 144 can be used to pass IT policy commands from the host system to the mobile device 10. This can be done in a wireless or wired manner. These instructions can then be passed to the IT policy module 146 to modify the configuration of the device 10. Alternatively, in some cases, the IT policy update can also be done over a wired connection.

The IT policy module 146 receives IT policy data that encodes the IT policy. The IT policy module 146 then ensures that the IT policy data is authenticated by the mobile device 100. The IT policy data can then be stored in the flash memory 108 in its native form. After the IT policy data is stored, a global notification can be sent by the IT policy module 146 to all of the applications residing on the mobile device 10. Applications for which the IT policy may be applicable then respond by reading the IT policy data to look for IT policy rules that are applicable.

Other types of software applications or components 139 can also be installed on the mobile device 10. These software applications 139 can be pre-installed applications (i.e. other than message application 138) or third party applications, which are added after the manufacture of the mobile device 10. Examples of third party applications include games, calculators, utilities, etc.

The additional applications 139 can be loaded onto the mobile device 10 through at least one of the wireless network 20, the auxiliary I/O subsystem 112, the data port 114, the short-range communications subsystem 122, or any other suitable device subsystem 124. This flexibility in application installation increases the functionality of the mobile device 10 and may provide enhanced on-device functions, communication-related functions, or both. For example, secure communication applications may enable electronic commerce functions and other such financial transactions to be performed using the mobile device 10.

The data port 114 enables a subscriber to set preferences through an external device or software application and extends the capabilities of the mobile device 10 by providing for information or software downloads to the mobile device 10 other than through a wireless communication network. The alternate download path may, for example, be used to load an encryption key onto the mobile device 10 through a direct and thus reliable and trusted connection to provide secure device communication.

The data port 114 can be any suitable port that enables data communication between the mobile device 10 and another computing device. The data port 114 can be a serial or a parallel port. In some instances, the data port 114 can be a USB port that includes data lines for data transfer and a supply line that can provide a charging current to charge the battery 130 of the mobile device 10.

The short-range communications subsystem 122 provides for communication between the mobile device 10 and different systems or devices, without the use of the wireless network 20. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download may be processed by the communication subsystem 24 and input to the main processor 102. The main processor 102 may then process the received signal for output to the display 28 or alternatively to the auxiliary I/O subsystem 112. A subscriber may also compose data items, such as e-mail messages, for example, using the keyboard 116 in conjunction with the display 28 and possibly the auxiliary I/O subsystem 112. The auxiliary subsystem 112 may comprise devices such as: a touch screen, mouse, track ball, infrared fingerprint detector, or a roller wheel with dynamic button pressing capability. The keyboard 116 is an alphanumeric keyboard and/or telephone-type keypad. However, other types of keyboards may also be used, such as a virtual or "soft" keyboard rendered as images on a touch screen. A composed item may be transmitted over the wireless network 20 through the communication subsystem 24.

For voice communications, the overall operation of the mobile device 10 in this example is substantially similar, except that the received signals are output to the speaker 118, and signals for transmission are generated by the microphone 120. Alternative voice or audio I/O subsystems, such as a voice message recording subsystem, can also be implemented on the mobile device 10. Although voice or audio signal output is accomplished primarily through the speaker 118, the display 28 can also be used to provide additional information such as the identity of a calling party, duration of a voice call, or other voice call related information.

Although the above has been described with reference to certain specific embodiments, various modifications thereof will be apparent to those skilled in the art without departing from the scope of the claims appended hereto.

## Claims

1. A method of operating a computing device, the method comprising:
providing an option to enable data for an electronic group to be removed when a member associated with the electronic group leaves the electronic group; and
enabling removal of the data from a group database for the electronic group when the member leaves.

2. The method according to claim 1, further comprising:
detecting that the member is going to leave the group; and
responsive to said detecting, providing the option by displaying a prompt.

3. The method according to claim 1 or claim 2, wherein enabling removal of the data comprises instructing a group server application to delete data associated with the member.

4. The method according to any one of claims 1 to 3, further comprising removing an indication of the electronic group from a user interface on the electronic device.

5. The method according to any one of claims 1 to 4, wherein enabling removal of the data comprises deleting the data on the electronic device and instructing at least one other electronic device storing the data to delete the data.

6. The method according to any one of claims 1 to 5, further comprising detecting that the member is going to leave the group, wherein the option initiates an automatic removal of the data responsive to said detecting .

7. The method according to any one of claims 1 to 6, wherein the option is provided upon creation of the group.

8. The method according to any one of claims 1 to 7, further comprising adjusting a capacity indicative of a number of members permitted in an electronic group after the member leaves the group.

9. A computing device comprising a processor and memory, the memory comprising computer executable instructions that when executed by the processor, cause the processor to perform the method according to any one of claims 1 to 8.

10. A computer readable medium comprising computer executable instructions that when executed by a processor of a computing device, cause the processor to perform the method according to any one of claims 1 to 8.
